# EUROPEAN PATENT SPECIFICATION

(11) **EP 0 985 078 B1**
(45) Date of publication and mention of the grant of the patent: **25.10.2006**
(21) Application number: 98922307.8
(22) Date of filing: 15.05.1998
(51) Int. Cl.: E05C 3/04, F16K 7/06, B25B 7/14

(54) **LOCKING SQUEEZE-OFF CLAMP**
KLEMMZANGE MIT VERSCHLUSSMECHANISMUS
PINCE-ETAU AVEC MECANISME DE VERROUILLAGE

(30) Priority: 16.05.1997 US 46759 P
(43) Date of publication of application: 15.03.2000
(73) Proprietor: Timberline Tool And Casting, Whitefish, MT 59937 (US)
(72) Inventor: COLLISTER, Richard, L., Jr., Frenchtown, MT 59834 (US); GREEN, Kenneth, H., Whitefish, MT 59937 (US)
(74) Representative: Strehl Schübel-Hopf & Partner
(86) International application number: PCT/US1998/009916
(87) International publication number: WO 1998/051894

(56) References cited:
- DE-A- 4 411 717
- DE-U- 9 216 463
- US-A- 493 159
- US-A- 986 593
- US-A- 1 463 622
- US-A- 1 877 768
- US-A- 2 221 923
- US-A- 3 460 797
- US-A- 4 582 292
- US-A- 5 152 497

## Description

### BACKGROUND OF THE INVENTION

The present invention relates to clamping devices, and more particularly, to a pliers-type clamp with a lock or latch feature.

The adjustable clamp herein described comprises a first jaw and handle, a second jaw movably connected to the first jaw, an operating linkage connected to the jaws, including a operating handle and a link, for moving the second jaw in response to the operation of the linkage, an adjustment mechanism associated with one of the jaws for changing the force exerted on a workpiece when the clamp is fully closed, and an automatic latch mechanism. The clamp is an over-the-center clamp, wherein the closing of the handles brings the linkage, particularly the link, over center.

The latch mechanism is operably associated with the operating linkage and provides the advantage of selectively, automatically locking the clamp closed after the clamp reaches its closed position. The latch mechanism requires a deliberate, selective choice to set it in its unlocked or nonlock mode in order to open the clamp from its closed position once it is latched, thereby preventing the inadvertent opening of the clamp.

German patent DE 4411717 discloses a clamping tool according to the preamble of claim 1 with latch mechanism which has the features included in the first part of claim 1, but does not permit selectively switching from the unlock mode into the lock mode and vice versa. Further embodiments of the invention are defined in the dependent claims.

The automatic latch mechanism of the present invention does not add undue complexity or weight to the clamp.

Other features and advantages of the clamping tool with latching mechanism of the present invention will become more fully apparent and understood with reference to the following description and drawings.

### BRIEF DESCRIPTION OF THE DRAWINGS

Figure 1 is an elevation of the clamp with latching mechanism of the present invention.
Figure 2 is a perspective view of the present invention, with extended clamp handles for working in deep trenches or ditches.
Figure 3 is an elevational view of the present invention, particularly the latch mechanism, in one functional position.
Figure 4 is a perspective of the present invention depicting the latch mechanism in another position, namely, in an unlocked setting.
Figure 5 depicts the latch mechanism of the present invention in an unlocked setting with the clamp open.
Figure 6 is an elevational view of the latch mechanism in an unlocked setting with the clamp closed, but unlocked.
Figure 7 is a sectional view taken along line 7-7 of Figure 6.
Figure 8 is an elevational view depicting another embodiment of the present invention, wherein a spring-loaded ball/detent arrangement is carried in a handle for setting the clamp in its locked and unlocked modes.
Figure 9 is a sectional view taken along line 9-9 of Figure 8.
Figure 10 is an elevational view of another embodiment of the present invention in one operational mode.
Figure 11 is an elevational view of the embodiment depicted in Figure 10 in another operational mode.

### DETAILED DESCRIPTION OF THE PREFERRED EMBODIMENT

The Figures depict the squeeze-off clamp with latching mechanism of the present invention, and features and components thereof. With regard to means for fastening, mounting, attaching or connecting the components of the present invention to form the clamp with latch mechanism as a whole, unless specifically described otherwise such means are intended to encompass conventional fasteners such as machine screws, machine threads, snap rings, rivets, nuts and bolts, toggles, pins and the like. Components may also be connected by welding or deformation, if appropriate. Unless specifically otherwise disclosed or taught, materials for making components of the present invention are selected from appropriate materials such as aluminum, steel, metallic alloys and the like, and appropriate manufacturing or production methods including casting, extruding, molding and machining may be used.

Any references to front and back, right and left, top and bottom, upper and lower, and horizontal and vertical are intended for convenience of description, not to limit the present invention or its components to any one positional or spacial orientation. Such terms are to be read and understood with their conventional meanings.

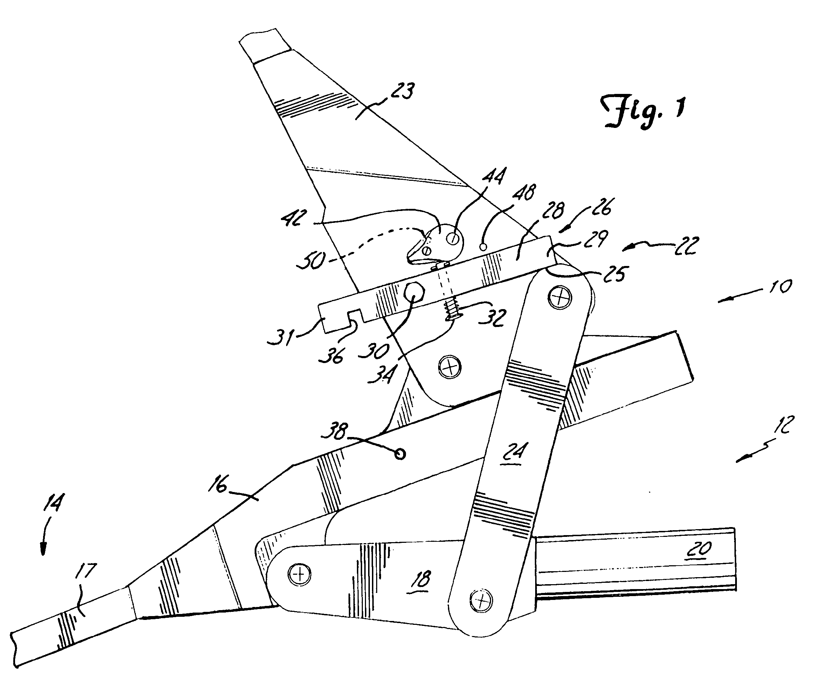

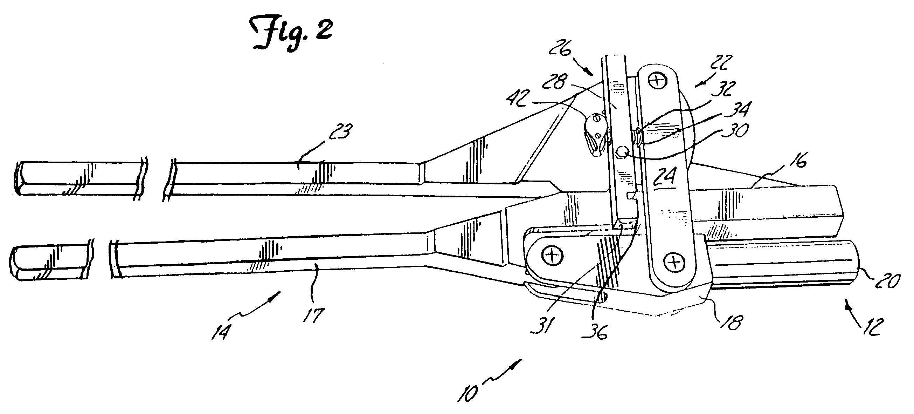

Referring then to the Figures, particularly Figures 1 and 2, the clamp 10 of the present invention has a jaw or work piece gripping end 12 and a handle end 14. The clamp 10 includes a static top jaw 16 with an integral handle 17, a movable bottom jaw 18 and an operating linkage 22, including a handle 23 and a link 24, operably coupling the jaws. The bottom jaw includes a barrel-like adjustment member 20. The clamp 10 is provided with an automatic latch mechanism 26.

Referring to Figure 1, the latch mechanism 26 is carried by the clamp top handle 23, part of the operating linkage 22. The latch mechanism includes a latch bar 28, which is pivotally pinned to the handle 23 by a pin 30. The bar 28 is an elongated, generally rectangular, solid single piece of material. Approximately mid-way along its length, adjacent to the pin 30, it carries a latch bar spring 32 held in place by a latch spring pin 34. Alternatively, the spring could be carried in a similar fashion by the link 24. Adjacent one end 31, the latch bar 28 includes a relieved notch 36 forming a latch hook for releaseably engaging an outstanding latch post 38 carried by the top jaw 16.

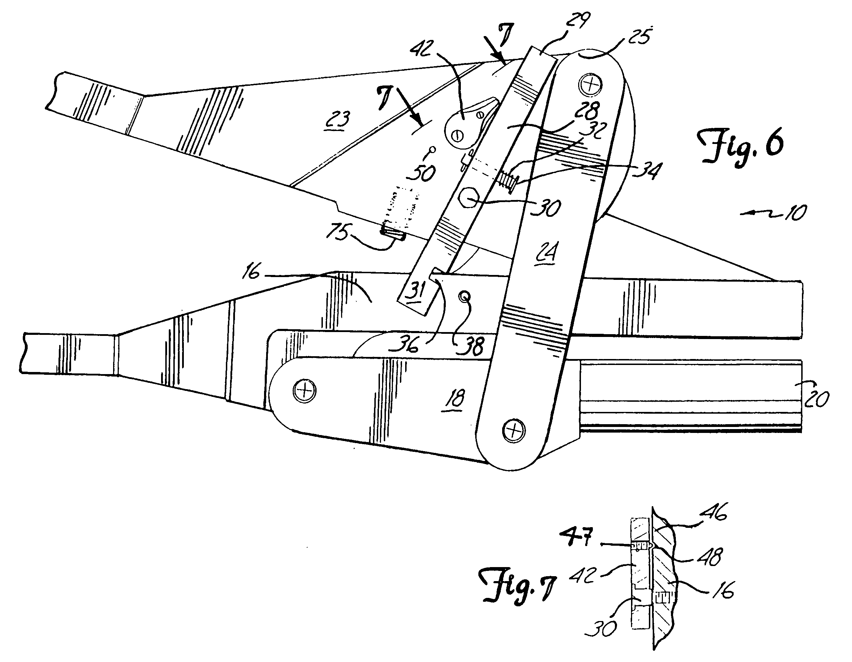

The latch mechanism 26 also includes a function and indicator operating knob 42 which is pinned to the handle 23 by a pin 44. Referring to Figure 7, the knob 42 houses a spring biased pin 47 (Figure 7) which extends from the underside thereof and selectively lodges or is received in one of the latch detents 48, 50 depending on the selected position of the knob 42. The knob 42 pivots around the pin 44 and is held in either the locked or unlocked position by the engagement of the knob spring pin 47 with one of the detents 48, 50, depending upon the position of the knob 42. This causes the knob 42 to be held in the appropriate position for the mode of clamp operation as explained below.

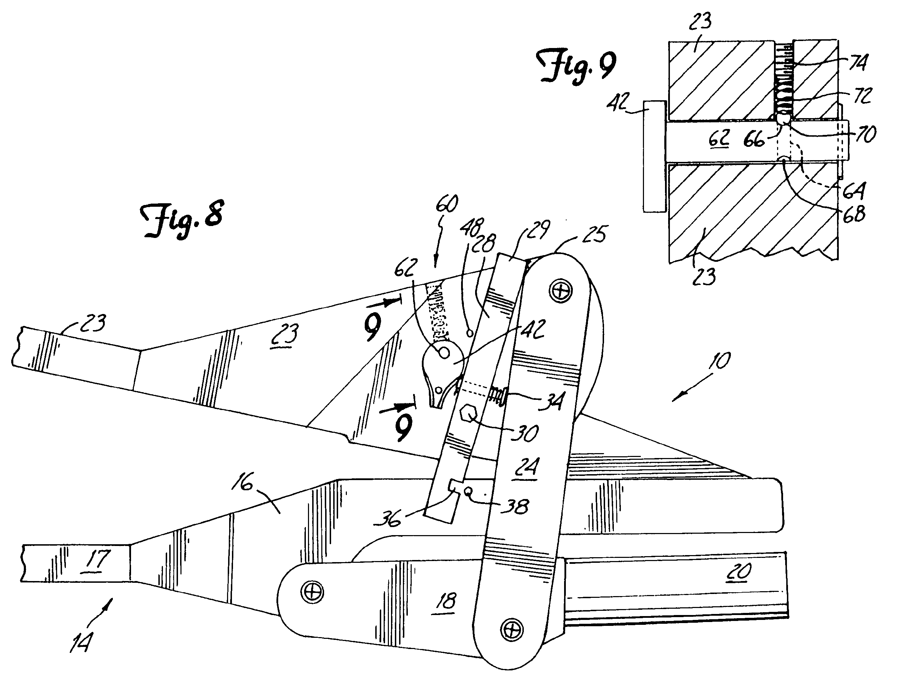

Figure 8 depicts another embodiment of the present invention, wherein a spring-loaded ball/detent arrangement 60 is carried in handle 23 for setting the clamp in its locked and unlocked modes. Referring to Figure 9, the pin 44 for the knob 42 is replaced by a shaft 62. The shaft 62 may be integral with the knob 42 or the knob may be fixed to the shaft. The shaft 62 includes a detent bore 64 to provide two detents 66, 68, 180 degrees apart on the shaft, one for holding the knob 42 in its locked setting and the other for holding the knob 42 in its unlock setting. The handle 23 is bored to receive a ball 70, spring 72 and set screw 74. Two superficial detents (not shown) may be used on the shaft 62 rather than a throughbore.

Another alternative feature of the present invention is depicted in Figure 6. One of the handles 17, 23, in the depicted instance handle 23, includes a threaded bore for receiving a set screw 75 for adjusting the clamp closure and over-the-center locking by adjusting or varying the amount the handles can be brought together. The further the screw 75 is screwed in, the closer together the handles 17, 23 can come, and the farther over-the-center the link 24 can be moved, and the converse. This feature provides a fine tuning of the degree of over-the-center travel in the linkage, particularly of the link 24.

The operation of the latching mechanism 26 of the present invention can be appreciated by consideration of the remaining drawings which depict the present invention in various operational settings or positions. Referring to Figure 1, the jaws of the clamp 10 are depicted in a nearly fully open position with the locking knob 42 in its lock setting. In this position, the latch bar 28 is free to pivot about the pin 30 holding it to the handle 23. The length of the latch bar 28 is specifically chosen to permit the upper region 29 of the bar to contact or ride against the end curved portion 25 of the link 24, and to prevent it from rotating or falling downwardly against the side of the link 24 which would cause the clamp 10 to jam in the open position.

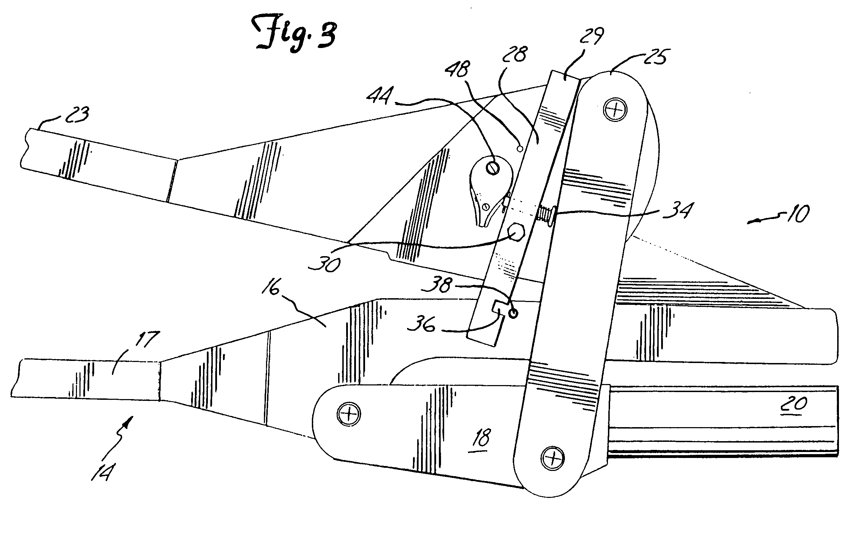

As the handles 17, 23 are moved toward each other, the jaws 16, 18 close. The latch bar 28 remains free to pivot between the latch knob 42 and the link 24. The knob 42 is specifically located on the operating handle 23 to prevent the bar 28 from pivoting into position in which the bottom end 31 could jam against the post 38. Referring to Figure 3, the latch mechanism 26 is still in the lock setting and the clamp handles are almost closed. As the handles are brought together, the bottom end or region 31 of the latch bar 28 is free to pivot into a position in which the lower portion of the bar 28 between the end 31 and the notch 36 rides smoothly against the latch post 38 as the handles close. Even in the position depicted in Figure 3, the latch bar 28 can still pivot away from the post 38 and avoid capturing it.

Referring to Figure 2, the latch mechanism 26 of the present invention is depicted in its locked position wherein the clamp handles 17, 23 and jaws 16, 18 are closed and locked. Note that as the top handle 23 and the bottom handle 17 are brought together and the clamp 10 enters its closed position, the side of the link 24 contacts and exerts force on the latch bar spring pin 34 and the spring 32. The spring 32 causes the latch bar 28 to pivot so that the lower portion of the latch bar 28 comes into contact against the post 38. As the handles are closed, the link 24 continues to put pressure on the spring 32, keeping the lower part of the bar 28 against the post 38. When the handles are completely closed, the bar 28 is driven sufficiently so the notch 36 receives the post 38. The latch bar 28 is held in position with the notch 36 around the post 38 due to the force created by the link 24 compressing the spring 32, thereby locking the handles together.

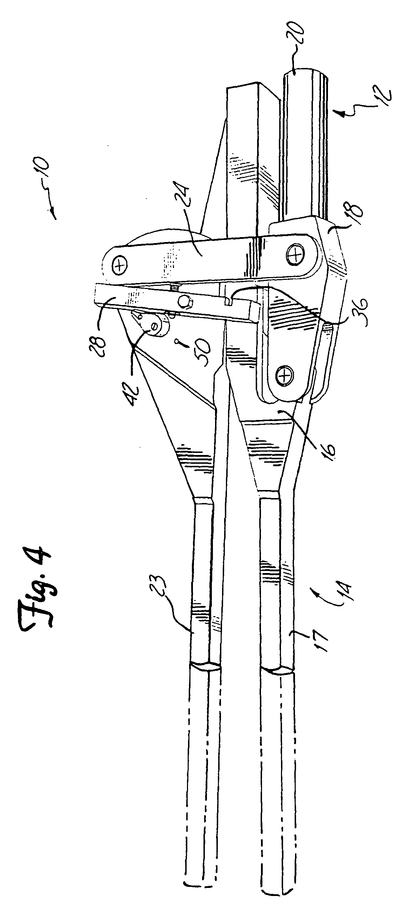

Referring to Figures 4-6, initially Figure 6, the clamp 10 and latch mechanism 26 of the present invention is depicted in its unlocked setting with the clamp handles 17, 23 nearly closed, but unlocked in order to open the clamp 10. To open the clamp 10 (from the locked position depicted in Figure 2), the knob 42 is rotated from its locked position to the unlocked position shown in Figure 6. When the knob 42 is moved to the unlock position, the knob 42 bears against the upper end of the latch bar 28, further compressing the latch bar spring 32, pivoting the bar 28 and causing the notch 36 to disengage from the post 38. The handles can then be moved apart and, as they are, the link 24 moves away from the latch bar spring (i.e., from the position depicted in Figure 4 to the position depicted in Figure 6). When the link has moved sufficiently, the spring will no longer be compressed. The latch bar 28 remains free from the post 38 because, in its unlock position, the knob 42 prevents the bar 28 from pivoting sufficiently for the notch 36 to engage the post 38.

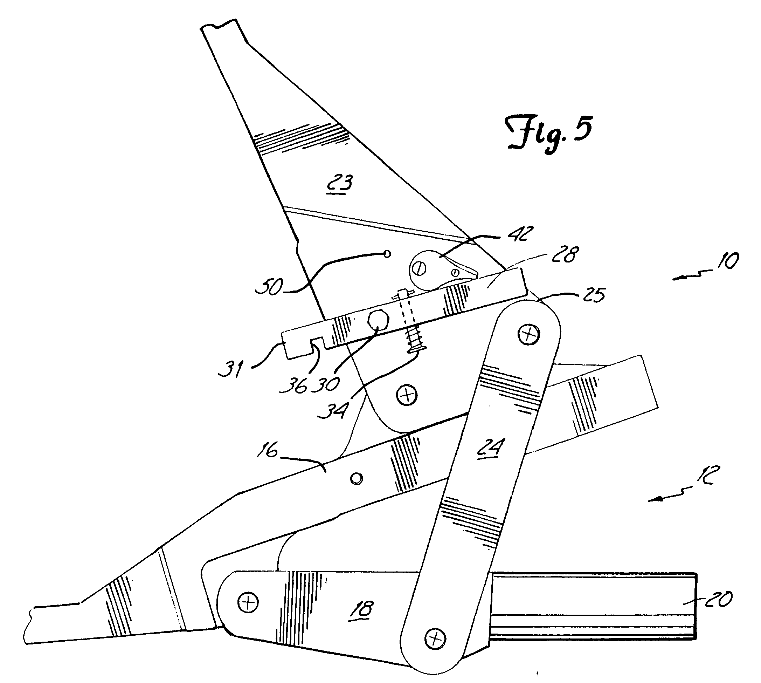

Figure 5 depicts the clamp 10 in its fully open position and in an unlocked setting. The bar 28 is free to pivot in the space between the knob 42 and the upper portion 25 of the link 24.

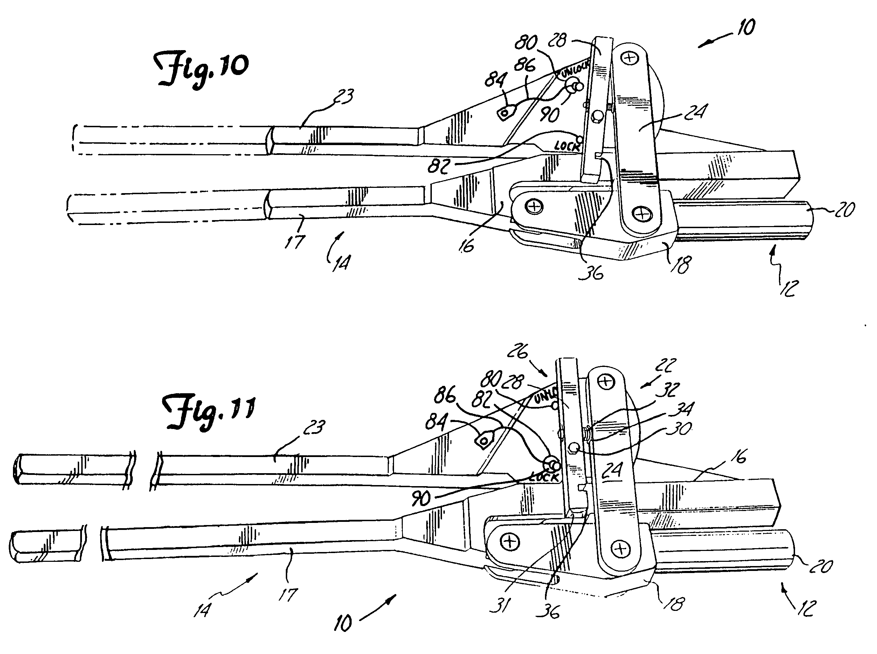

Figures 10 and 11 depict another embodiment of the present invention, wherein a pair of holes 80, 82 bored in the handle 23 adjacent to the forward end thereof, near the link 24. The handle 23 is also adapted to carry an attachment plate 84 for attaching a cord or lanyard 86 to the handle 23. The free end of the lanyard 86 carries a pin 90 for being selectively and removably received in one of the holes 80, 82. Preferably, the pin 90 is a "quick release" pin of the commercially available type which include a ball or other suitable detent feature. When the pin 90 is lodged in hole 80, as depicted in Figure 10, the clamp 10 is in its unlocked mode, and when the pin 90 is placed in the other hole 82, the clamp 10 is in its locked mode.

The materials for forming the clamp and latching mechanism of the present invention may be as follows:

| **Part** | **Material** |
|---|---|
| Latch bar | 6061 T6 aluminum |
| Latch bar pin | 18-8 stainless steel |
| Latch bar spring | Type 302 stainless steel |
| Latch bar spring pin | 18-8 stainless steel |
| Latch pin | 18-8 stainless steel |
| Knob | 6061 T6 aluminum |
| Knob spring pin | stainless steel with Delrin nose |

Note that, as shown in Figures 2 and 4 (in phantom in Figure 4), the clamping tool 10 may be provided in an embodiment with extended length handles for using the tool 10 on hard to reach work pieces, e.g., conduits or the like at the bottom of a trench. The handles of long-handled embodiments of the present invention may be of any selected length, as long the operating efficiency of the clamp/latch mechanism is not impaired. The latch bar 28 and knob 42 are machined or formed from stock purchased from ALCOA. The various springs and pins may be selected from commercially available items, included those available from McMaster-Carr and the knob spring pin is purchased from the Reid Tool Company.

It is desired that the described embodiment be considered in all respects as illustrative, not restrictive.

## Claims

1. A clamping tool (10) with a latch mechanism (26), said clamping tool (10) comprising:
a latch bar (28) movably pinned to the tool, said latch bar (28) having a notch (36) adjacent one end (31) for receiving a latch post (38) carried by the tool; and
a spring member (32) for urging the notch (36) in the direction of the latch post (38);
**characterized by** means (42; 90) for selectively maintaining the clamping tool (10) in either one of an unlocking and a locking mode where in locking mode, the clamping tool is automatically locked when it reaches its closed position.

2. The clamping tool (10) according to claim 1 including an operating member (24), said spring member (32) contacting the operating member (24) and the latch bar (28) as the clamping tool (10) is operated, thereby causing the spring member (32) to urge the end of the latch bar (28) adjacent to the notch (36) in the direction of the latch post (38).

3. The clamping tool (10) according to claim 2, wherein the spring member (32) is carried by the latch bar (28).

4. The clamping tool (10) according to claim 2, wherein the spring member (32) is carried by the operating member (24).

5. The clamping tool (10) according to claim 1, wherein the latch bar (28) is an elongated, generally solid single piece of material.

6. The clamping tool (10) according to claim 1, wherein said means comprises an operating knob (42).

7. The clamping tool (10) according to claim 1, wherein the operating knob (42) is eccentric and is movably coupled to the clamping tool (10).

8. The clamping tool (10) according to claim 6, wherein the operating knob (42) is disposed adjacent the latch bar (28), the operating knob (42) having a first selectable position wherein the operating knob (42) limits movement of the latch bar (28) in a direction away from the latch post (28) and a second delectable position wherein the operating knob (42) pivots the latch bar (28) sufficiently to prevent the latch bar (28) from engaging the latch post (38).

9. The clamping tool (10) according to claim 1, wherein said means comprises a pin (90) movable between one of two available positions.

10. The clamping tool (10) according to claim 9, wherein the pin (90) is removable and is selectively engagable with a first throughbore (82) disposed adjacent the latch bar (28) so that when the pin (90) is engaged with the first throughbore (82), the pin (90) limits movement of the latch bar (28) away from the latch post (38), and a second throughbore (80), wherein when the pin (90) is engaged with the second throughbore (80), the pin (90) pivots the latch bar (28) sufficiently to prevent the latch bar (28) from engaging the latch post (28).

11. The clamping tool (10) according to claim 1, wherein the clamping tool (10) comprises a static jaw (16) with an integral handle (17), a movable jaw (18) and an operating linkage (22), including a handle (23) and the operating member (24), the operating member (24) operably coupling the jaws (16,18).

## Patentansprüche

1. Klemmzange (10) mit einem Verriegelungsmechanismus (26), umfassend:
ein beweglich an der Zange festgestecktes Verriegelungsglied (28), wobei das Verriegelungsglied (28) eine an einem Ende (31) anliegende Kerbe (36) zum Empfangen eines von der Zange getragenen Verriegelungspfostens (38) aufweist; und
ein Federelement (32) zum Drängen der Kerbe (36) in Richtung des Verriegelungspfostens (38);
**gekennzeichnet durch** Mittel (42; 90) zum wahlweisen Halten der Klemmzange (19) in entweder einem entsperrenden oder einem sperrenden Zustand, wobei sich die Klemmzange im sperrenden Zustand automatisch sperrt, wenn sie ihre geschlossene Stellung erreicht.

2. Klemmzange (10) nach Anspruch 1 mit Bedienmitteln (24), wobei das Federelement (32) die Bedienmittel (24) und das Verriegelungsglied (28) berührt, wenn die Klemmzange (10) bedient wird, wodurch das Federelement (32) dazu gebracht wird, das an der Kerbe (36) anliegende Ende des Verriegelungsglieds (28) in Richtung des Verriegelungspfostens (38) zu drängen.

3. Klemmzange (10) nach Anspruch 2, wobei das Federelement (32) vom Verriegelungsglied (28) getragen wird.

4. Klemmzange (10) nach Anspruch 2, wobei das Federelement (32) von den Bedienmitteln (24) getragen wird.

5. Klemmzange (10) nach Anspruch 1, wobei das Verriegelungsglied (28) ein längliches, im wesentlichen festes einzelnes Materialstück ist.

6. Klemmzange (10) nach Anspruch 1, wobei die Mittel einen Bedienknopf (42) umfassen.

7. Klemmzange (10) nach Anspruch 1, wobei der Bedienknopf (42) exzentrisch ist und beweglich mit der Klemmzange (10) verbunden ist.

8. Klemmzange (10) nach Anspruch 6, wobei der Bedienknopf (42) am Verriegelungsglied (28) anliegend angeordnet ist, wobei der Bedienknopf (42) eine erste auswählbare Stellung, in der der Bedienknopf (42) Bewegungen des Verriegelungsglieds (28) in einer vom Verriegelungspfosten (28) wegweisenden Richtung begrenzt, und eine zweite auswählbare Stellung hat, in der der Bedienknopf (42) das Verriegelungsglied (28) genügend schwenkt, um das Verriegelungsglied (28) daran zu hindern, mit dem Verriegelungspfosten (38) einzurasten.

9. Klemmzange (10) nach Anspruch 1, wobei die Mittel einen zwischen einer von zwei verfügbaren Stellungen beweglichen Zapfen (90) umfassen.

10. Klemmzange (10) nach Anspruch 9, wobei der Zapfen (90) entfernbar ist und wahlweise in Eingriff gebracht werden kann mit einem am Verriegelungsglied (28) angrenzend angeordneten ersten Loch (82), so daß der Zapfen (90), wenn er in das erste Loch (82) eingreift, Bewegungen des Verriegelungsglieds (28) vom Verriegelungspfosten (38) weg begrenzt, sowie mit einem zweiten Loch (80), wobei der Zapfen (90), wenn er in das zweite Loch (80) eingreift, das Verriegelungsglied (28) genügend schwenkt, um das Verriegelungsglied (28) daran zu hindern, mit dem Verriegelungspfosten (38) einzurasten.

11. Klemmzange (10) nach Anspruch 1, wobei die Klemmzange (10) eine statische Backe (16) mit einem einstückigen Griff (17), eine bewegliche Backe (18) sowie eine Bedienungsverbindung (22) aufweist, die einen Griff (23) und die Bedienmittel (24) enthält, wobei die Bedienmittel (24) die Backen (16, 18) bedienungsgemäß verbinden.

## Revendications

1. Outil de serrage (10) à mécanisme de verrouillage (26), ledit outil de serrage (10) comprenant:
une barre de verrouillage (28) calée de manière mobile sur l'outil, ladite barre de verrouillage (28) ayant une encoche (36) adjacente à une première extrémité (31) afin de recevoir un ergot de verrouillage (38) porté par l'outil ; et
un moyen formant ressort (32) pour pousser l'encoche (36) en direction de l'ergot de verrouillage (38) ;
**caractérisé par** un moyen (42 ; 90) servant à maintenir de manière sélective l'outil de serrage (10) dans l'un ou l'autre d'un mode de déverrouillage et d'un mode de verrouillage, l'outil de serrage, lorsqu'il est en mode de verrouillage, étant automatiquement verrouillé lorsqu'il atteint sa position fermée.

2. Outil de serrage (10) selon la revendication 1 comprenant un élément d'actionnement (24), ledit élément formant ressort (32) venant au contact de l'élément d'actionnement (24) et de la barre de verrouillage (28) lorsque l'outil de serrage (10) est actionné, ce qui amène l'élément formant ressort (32) à pousser l'extrémité de la barre de verrouillage (28) adjacente à l'encoche (36) en direction de l'ergot de verrouillage (38).

3. Outil de serrage (10) selon la revendication 2, dans lequel l'élément formant ressort (32) est porté par la barre de verrouillage (28).

4. Outil de serrage (10) selon la revendication 2, dans lequel l'élément formant ressort (32) est porté par l'élément d'actionnement (24).

5. Outil de serrage (10) selon la revendication 21, dans lequel la barre de verrouillage (28) est un seul morceau de matière allongé, globalement massif.

6. Outil de serrage (10) selon la revendication 1, dans lequel ledit moyen est constitué par un bouton d'actionnement (42).

7. Outil de serrage (10) selon la revendication 1, dans lequel le bouton d'actionnement (42) est excentré et est accouplé de manière mobile avec l'outil de serrage (10).

8. Outil de serrage (10) selon la revendication 6, dans lequel le bouton d'actionnement (42) est disposé au voisinage immédiat de la barre de verrouillage (28), le bouton d'actionnement (42) ayant une première position sélectionnable dans laquelle le bouton d'actionnement (42) limite l'éloignement de la barre de verrouillage (28) par rapport à l'ergot de verrouillage (38) et une seconde position sélectionnable dans laquelle le bouton d'actionnement (42) fait suffisamment pivoter la barre de verrouillage (28) pour empêcher la barre de verrouillage (28) de venir contre l'ergot de verrouillage (38).

9. Outil de serrage (10) selon la revendication 1, dans lequel ledit moyen est constitué par une pointe (90) mobile entre deux positions possibles.

10. Outil de serrage (10) selon la revendication 9, dans lequel la pointe (90) est amovible et peut s'engager de manière sélective dans un premier trou traversant (82) disposé au voisinage immédiat de la barre de verrouillage (28) de façon que, lorsque la pointe (90) est engagée dans le premier trou traversant (82), la pointe (90) limite l'éloignement de la barre de verrouillage (28) par rapport à l'ergot de verrouillage (38), et dans un second trou traversant (80), la pointe (90), lorsqu'elle est engagée dans le second trou traversant (80), faisant suffisamment pivoter la barre de verrouillage (28) pour empêcher la barre de verrouillage (28) de venir contre l'ergot de verrouillage (38).

11. Outil de serrage (10) selon la revendication 1, dans lequel l'outil de serrage (10) comporte un mors statique (16) faisant corps avec une poignée (17), un mors mobile (18) et un mécanisme d'actionnement (22), comportant une poignée (23) et l'élément d'actionnement (24), l'élément d'actionnement (24) faisant coopérer les mors (16, 18).
